# EUROPÄISCHE PATENTSCHRIFT

(11) **EP 2 184 252 B1**
(45) Veröffentlichungstag und Bekanntmachung des Hinweises auf die Patenterteilung: **21.01.2015**
(21) Anmeldenummer: 09175009.1
(22) Anmeldetag: 04.11.2009
(51) Int. Cl.: B66C 23/86, B66D 5/26, B60T 13/66, B60T 13/68

(54) **Bremsvorrichtung**
Braking device
Dispositif de freinage

(30) Priorität: 05.11.2008 DE 102008056022
(43) Veröffentlichungstag der Anmeldung: 12.05.2010
(73) Patentinhaber: Terex Cranes Germany GmbH, 66482 Zweibrücken (DE)
(72) Erfinder: Jene, Thilo, 66583, Spiesen-Elversberg (DE)
(74) Vertreter: Hofmann, Matthias

(56) Entgegenhaltungen:
- WO-A1-98/27287
- DE-A1- 1 430 968
- DE-A1-102006 040 459
- DE-C- 616 738
- US-A- 4 696 377

## Beschreibung

Die Erfindung betrifft eine hydraulisch gesteuerte Bremsvorrichtung, insbesondere zum Abbremsen hydraulisch angetriebener Drehwerke in Arbeitsmaschinen, sowie einen Mobil-Kran mit einer derartigen Bremsvorrichtung.

Aus US 4,696,377 ist eine Bremsvorrichtung für ein Bohrhebewerk bekannt. Eine derartige Bremsvorrichtung ermöglicht ein Abbremsen des Bohrwerks derart, dass eine Bohrtrommel schlagartig gestoppt wird.

Die WO 98/27287 A1 zeigt zwei Hydraulikmotoren mit jeweils einer Bremse, die auf einem gemeinsamen Abtrieb arbeiten. Aus der DE 616 738 A ist eine Bremsschaltung bekannt, mit der Überlastungen dadurch reduziert werden, dass mehrere Bremsen nacheinander in Eingriff gebracht werden, wobei ein erforderlicher Druck mittels einer Ölpumpe zur Verfügung gestellt wird.

Ein hydraulisch angetriebenes Drehwerk mit einer hydraulisch gesteuerten Bremsvorrichtung ist aus der DE 10 2006 040 459 A1 bekannt. Darin sind Steuerungsvarianten eines offenen Kreises und eines geschlossenen Kreises beschrieben.

Für den Fall eines Ausfallens einer Drehwerkssteuerung nimmt ein Drehwerk in einem offenen Kreis eine nicht beeinflussbare, sichere Position ein, indem das Drehwerk entweder frei oder gegen einen geringen Systemwiderstand ausdreht. Eine Beschädigung eines Auslegersystems, das an dem Drehwerk angebracht ist, kann aufgrund einer Kollision beim Ausdrehen des Auslegersystems nicht ausgeschlossen werden. Im geschlossenen Kreis erfolgt bei dem Ausfallen der Drehwerkssteuerung ein abruptes Abbremsen, sodass aufgrund einer mechanischen Überlastung das Auslegersystem, insbesondere bei dem Abbremsen einer hohen Drehgeschwindigkeit, beschädigt werden kann.

Es ist die Aufgabe der vorliegenden Erfindung, eine Bremsvorrichtung derart zu schaffen, dass bei einem Ausfall einer Drehwerkssteuerung keine Beschädigungen eines Auslegersystems in Folge von sicherheitskritischen Drehbühnenbewegungen auftreten.

Diese Aufgabe ist erfindungsgemäß durch eine Bremsvorrichtung mit den im Anspruch 1 angegebenen Merkmalen gelöst.

Erfindungsgemäß wurde erkannt, dass eine Drehbewegung eines Auslegersystems bei einem Ausfall einer Druckversorgung in Steuerleitungen einer Bremsvorrichtung sicher und gezielt abgebremst werden kann, indem die Bremsvorrichtung mindestens einen Drehwerksantrieb und mindestens zwei Haltebremsen zum Abbremsen der Drehbewegung aufweist, wobei eine Haltebremse zeitverzögert gegenüber mindestens einer weiteren Haltebremse schließt. Dabei kann die Bremsvorrichtung entweder genau einen Drehwerksantrieb mit mehreren Haltebremsen, mehrere Drehwerksantriebe mit jeweils einer Haltebremse oder mehrere Drehwerksantriebe mit jeweils mehreren Haltebremsen aufweisen. Die Steuerleitungen sind jeweils einer Haltebremse zugeordnet und mit dieser verbunden. Weiterhin ist an die Haltebremsen eine Druckleitung über mindestens ein schaltbares Wegeventil und die Steuerleitungen angeschlossen. Durch Anlegen eines Hydraulikdruckes sind die Haltebremsen geöffnet und schließen selbsttätig, sobald ein kritischer Hydraulikdruck unterschritten wird. Jeweils an mindestens einer der Steuerleitungen sind ein Druckspeicher und eine Drosseleinrichtung angebracht, sodass bei einem Ausfall der Druckversorgung in den Steuerleitungen eine mit dem Druckspeicher und der Drosseleinrichtung verbundene Steuerleitung zusätzlich mit Druck beaufschlagt wird. Dadurch wird der kritische Hydraulikdruck in dieser Steuerleitung zu einem späteren Zeitpunkt unterschritten, sodass die mit dieser Steuerleitung verbundene Haltebremse zeitverzögert gegenüber der mindestens einen weiteren Haltebremse schließt und ein kollisions- und beschädigungsfreies Abbremsen eines Drehwerks mit hoher Drehgeschwindigkeit bei Ausfall einer Drehwerkssteuerung ermöglicht wird. Die erfindungsgemäße Bremsvorrichtung kann zum Abbremsen hydraulisch angetriebener Drehwerke in Arbeitsmaschinen verwendet werden. Durch die Verwendung mehrerer mit einer Steuerleitung verbundener Druckspeicher kann die Druckbeaufschlagung dieser Steuerleitung bei plötzlichem Druckabfall verbessert werden. Der Druckspeicher kann auch als Leitungsabschnitt der Steuerleitung ausgeführt sein. Die Drosseleinrichtung ist in einer Nutz-Strömungsrichtung offen und in einer der Nutz-Strömungsrichtung entgegen gerichteten Drossel-Strömungsrichtung als Drosselverbindung ausgeführt. Die Funktion wird beispielsweise durch eine oder mehrere Drosseln und/oder Blenden erfüllt. Es ist auch möglich, die Drosseln und/oder Blenden mit Rückschlagventilen zu kombinieren, sodass in der Nutz-Strömungsrichtung eine ungedrosselte Strömung des Druckmediums erfolgt. Besonders vorteilhaft ist die Ausführung der Drosseleinrichtung als Drosselrückschlagventil, bei dem eine Drossel und ein Rückschlagventil in einem einzigen Bauteil integriert sind. Es ist weiterhin möglich, als Drosseleinrichtung ein Stromregelventil zu verwenden, mittels dessen der Abfluss des Druckmediums aus der Steuerleitung bei Ausfall der Drehwerkssteuerung zeitverzögert einstellbar ist.

Die Verbindung jeder Steuerleitung über ein Wegeventil mit der Druckleitung nach Anspruch 2 ermöglicht das Lösen der Haltebremsen unabhängig voneinander durch Druckaufbau über die Druckleitung und das einer Haltebremse über eine Steuerleitung zugeordnete Wegeventil.

Bei einer Bremsvorrichtung nach Anspruch 3 sind mehrere, insbesondere alle mit Ausnahme einer, Steuerleitungen mit jeweils einem Druckspeicher und jeweils einer Drosseleinrichtung verbunden, wobei die Drosseleinrichtungen unterschiedlich eingestellt sind, sodass die damit verbundenen Haltebremsen mit unterschiedlichen Zeitverzögerungen schließen und damit ein maximales Drehmoment in mehreren zeitversetzten Stufen aufgebracht wird.

Eine Bremsvorrichtung nach Anspruch 4 ermöglicht die Sicherung eines Auslegersystems in einer gewünschten Position gegen Störeinflüsse wie beispielsweise Wind, da bei stillstehenden Drehwerksantrieben die Haltebremsen bei Ansteuerung unmittelbar schließen. Alternativ erlaubt eine derartige Bremsvorrichtung eine Sicherung des Drehwerks durch eine Betriebsbremse.

Eine Bremsvorrichtung mit einem hydraulisch gesteuerten Drehwerksantrieb nach Anspruch 5 ermöglicht ein schnelles Umschalten einer Drehrichtung der angesteuerten Drehwerksantriebe durch Betätigen eines Steuerventils.

Die Verwendung mindestens einer Bremsvorrichtung in einem Mobil-Kran nach Anspruch 6 garantiert ein beschädigungs- und kollisionsfreies Abbremsen einer Drehbewegung eines Auslegersystems bei hohen Drehgeschwindigkeiten, die insbesondere zwischen 1 min⁻¹ und 2 min⁻¹ und insbesondere bis zu 3 min⁻¹ betragen.

Ausführungsbeispiele der Erfindung werden nachfolgend anhand der Zeichnung näher erläutert. In dieser zeigen:
- Fig. 1 und 2: schematische Darstellungen verschiedener Ausführungsformen einer Bremsvorrichtung,
- Fig. 3: eine perspektivische Ansicht eines Oberwagenrahmens eines Mobil-Krans mit vier Drehwerksantrieben mit integrierten Haltebremsen; und
- Fig. 4: eine Explosionsdarstellung eines Mobil-Krans.

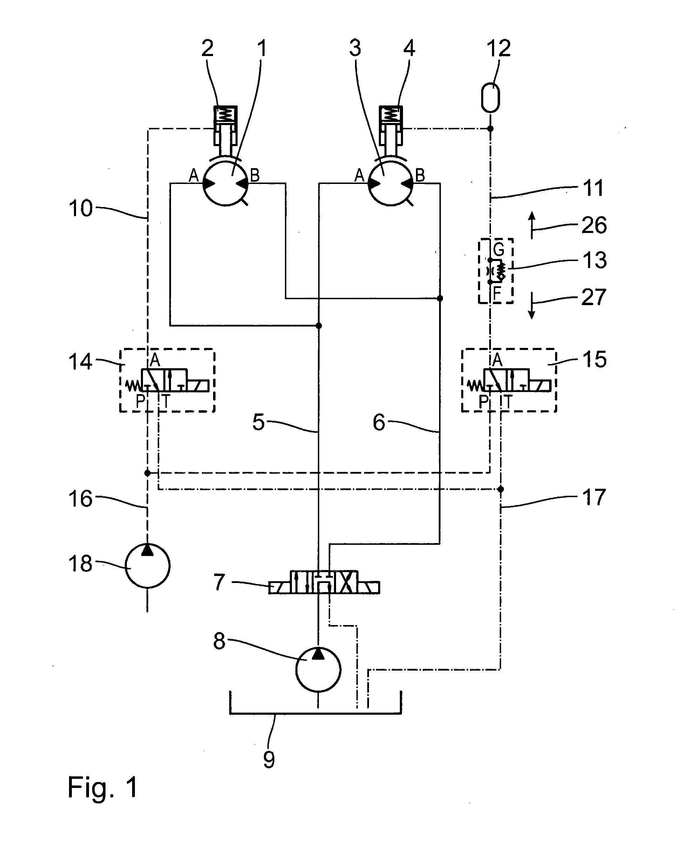

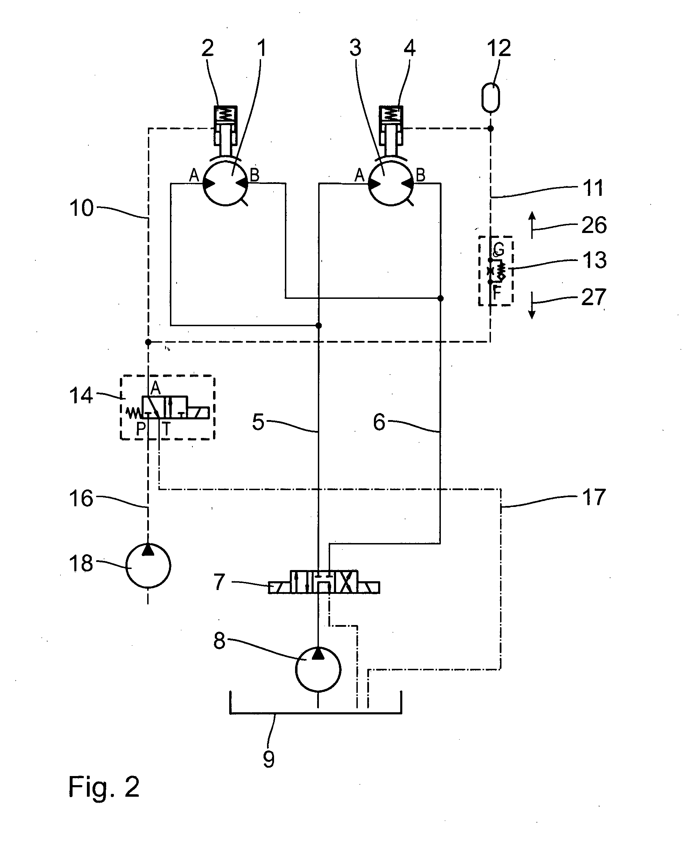

Die in den Figuren 1 und 2 gezeigten Ausführungsbeispiele einer hydraulisch gesteuerten Bremsvorrichtung weisen einen ersten Drehwerksantrieb 1 mit einer dem Drehwerksantrieb 1 zugeordneten Haltebremse 2, sowie einen zweiten Drehwerksantrieb 3 mit einer dem Drehwerksantrieb 3 zugeordneten Haltebremse 4 auf. Die Drehwerksantriebe 1, 3 sind über Drehwerksantrieb-Druckleitungen 5, 6 und ein Steuerventil 7 mit einer Konstantpumpe 8 verbunden, wobei die Konstantpumpe 8 an einem Tank 9 angebracht ist. Die erste Haltebremse 2 ist mit einer ersten Steuerleitung 10 und die zweite Haltebremse 4 mit einer zweiten Steuerleitung 11 verbunden, wobei an die zweite Steuerleitung 11 ein Druckspeicher 12 und eine Drosseleinrichtung 13 angeschlossen sind. Der Druckspeicher 12 kann auch als Leitungsabschnitt der Steuerleitung 11 ausgeführt sein, sodass auf einen separaten Druckspeicher verzichtet werden kann. Es können auch mehrere Druckspeicher 12 verwendet werden. Die Drosseleinrichtung 13 ist in einer Nutz-Strömungsrichtung 26 offen und in einer der Nutz-Strömungsrichtung 26 entgegen gerichteten Drossel-Strömungsrichtung 27 als Drosselverbindung ausgeführt. In dem in Fig. 1 gezeigten ersten Ausführungsbeispiel ist die Drosseleinrichtung als Drosselrückschlagventil 13 ausgeführt. Dadurch wird erreicht, dass in Nutz-Strömungsrichtung 26 eine ungedrosselte Strömung des Druckmediums und damit die Druckbeaufschlagung der Haltebremse 4 möglich sind. Bei Ausfall der Druckversorgung in der Steuerleitung 11 erfolgt aufgrund der Drosselwirkung des Drosselrückschlagventils 13 in der Drossel-Strömungsrichtung 27 ein zeitverzögerter Druckabfall und damit ein gesichertes Abbremsen des Drehwerkantriebs 3.

Gemäß dem ersten Ausführungsbeispiel der Bremsvorrichtung in Figur 1 ist die erste Steuerleitung 10 mit einem ersten Wegeventil 14 und die zweite Steuerleitung 11 mit einem zweiten Wegeventil 15 verbunden, wobei an die Wegeventile 14, 15 eine Druckleitung 16 und eine Tankleitung 17 angeschlossen sind. Die Tankleitung 17 verbindet die beiden Wegeventile 14, 15 mit dem Tank 9. Die Druckleitung 16 verbindet die beiden Wegeventile 14, 15 mit einer Druckversorgungseinheit 18.

In einem zweiten Ausführungsbeispiel gemäß Figur 2 wird nur ein Wegeventil 14 verwendet, an das die beiden Haltebremsen 2, 4 über die Steuerleitungen 10, 11 angeschlossen sind. Eine Druckversorgungseinheit 18 ist über eine Druckleitung 16 und ein Tank 9 über eine Tankleitung 17 an das Wegeventil 14 angeschlossen.

Die Drehwerksantriebe 1, 3 werden von der Konstantpumpe 8, die aus dem Tank 9 gespeist wird, über das Steuerventil 7 und die Drehwerksantrieb-Druckleitungen 5, 6 angetrieben. Den Drehwerksantrieben 1, 3 ist jeweils eine federbelastete Haltebremse 2, 4 zugeordnet. Durch Anlegen eines hydraulischen Druckes in den Steuerleitungen 10, 11 werden die Haltebremsen 2, 4 gegen eine Federkraft geöffnet, sodass eine Drehbewegung durch die Drehwerksantriebe 1, 3 ermöglicht wird. Durch Schalten der elektrisch schaltbaren Wegeventile 14, 15 in dem ersten Ausführungsbeispiel bzw. durch Schalten des elektrischen schaltbaren Wegeventils 14 in dem zweiten Ausführungsbeispiel einer Bremsvorrichtung wird die Druckleitung 16 über die Steuerleitungen 10, 11 mit den Haltebremsen 2, 4 verbunden, sodass mit der Druckversorgungseinheit 18 in den Steuerleitungen 10, 11 ein für das Öffnen der Haltebremsen 2, 4 notwendiger Druck aufgebaut wird. Erfolgt kein Schalten der Wegeventile 14, 15 bzw. des Wegeventils 14, so sind die Steuerleitungen 10, 11 über die Tankleitung 17 drucklos mit dem Tank 9 verbunden. In diesem Zustand wird der Druck in den Steuerleitungen 10, 11 abgebaut und die Haltebremsen 2, 4 schließen in Folge der Federkraft selbsttätig, sobald ein kritischer Hydraulikdruck von 20 bar, insbesondere von 10 bar und insbesondere von 5 bar, unterschritten ist. Bei einem Ausfall einer Druckversorgung in den Steuerleitungen 10, 11 wird die Steuerleitung 11 durch den Druckspeicher 12 zusätzlich mit Druck beaufschlagt, wobei das Drosselrückschlagventil 13 bewirkt, dass der Druck in der Steuerleitung 11 langsamer abfällt als in der Steuerleitung 10. Dadurch wird der kritische Hydraulikdruck in der Steuerleitung 11 zu einem späteren Zeitpunkt unterschritten als in der Steuerleitung 7, sodass die Haltebremse 4 zeitverzögert gegenüber der Haltebremse 2 schließt. Diese Zeitverzögerung beträgt mindestens 3 s und insbesondere bis zu 5 s.

Ein zusätzlicher Druckaufbau in den Steuerleitungen 10, 11 kann auch erfolgen, wenn die Wegeventile 14, 15 in einer Neutralstellung sind, d. h. die Steuerleitungen 10, 11 sind drucklos über die Tankleitung 17 mit dem Tank 9 verbunden.

Bei hydraulisch angetriebenen Drehwerken mit mehr als zwei Drehwerksantrieben können auch mehrere Drosselrückschlagventile und mehrere Druckspeicher vorgesehen werden, wobei jeweils an mindestens einer der Steuerleitungen ein Druckspeicher und ein Drosselrückschlagventil angebracht sind und die Drosselrückschlagventile derart unterschiedlich eingestellt sind, dass die damit verbundenen Haltebremsen mit unterschiedlichen Zeitverzögerungen schließen. Damit wird das maximale Bremsmoment nicht abrupt, sondern schrittweise in mehreren, mindestens zwei zeitversetzten Stufen aufgebracht.

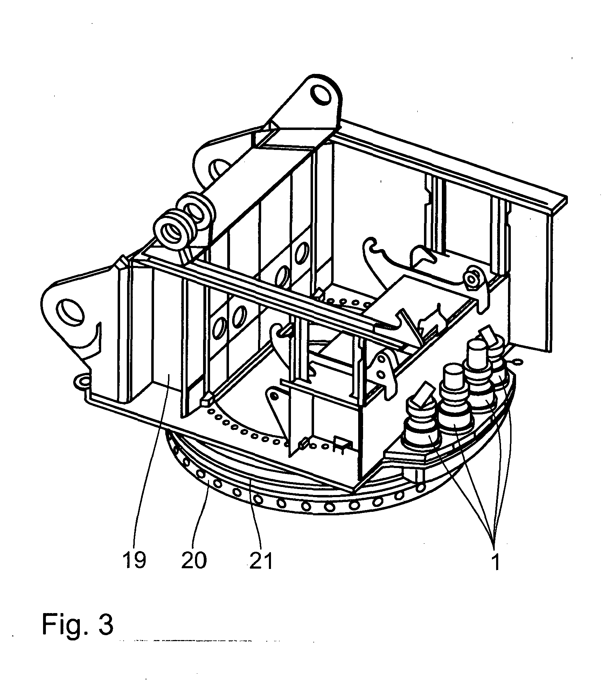

Ein in Figur 3 dargestellter Oberwagenrahmen 19 weist eine Drehverbindung 20 und einen Zahnkranz 21 auf. Weiterhin sind vier Drehwerksantriebe 1 an dem Oberwagenrahmen 19 angebracht. Eine Drehbewegung des Oberwagenrahmens 19 erfolgt durch die Drehwerksantriebe 1, deren Drehwerksgetriebe in den Zahnkranz 21 greifen und somit eine Drehbewegung ermöglichen.

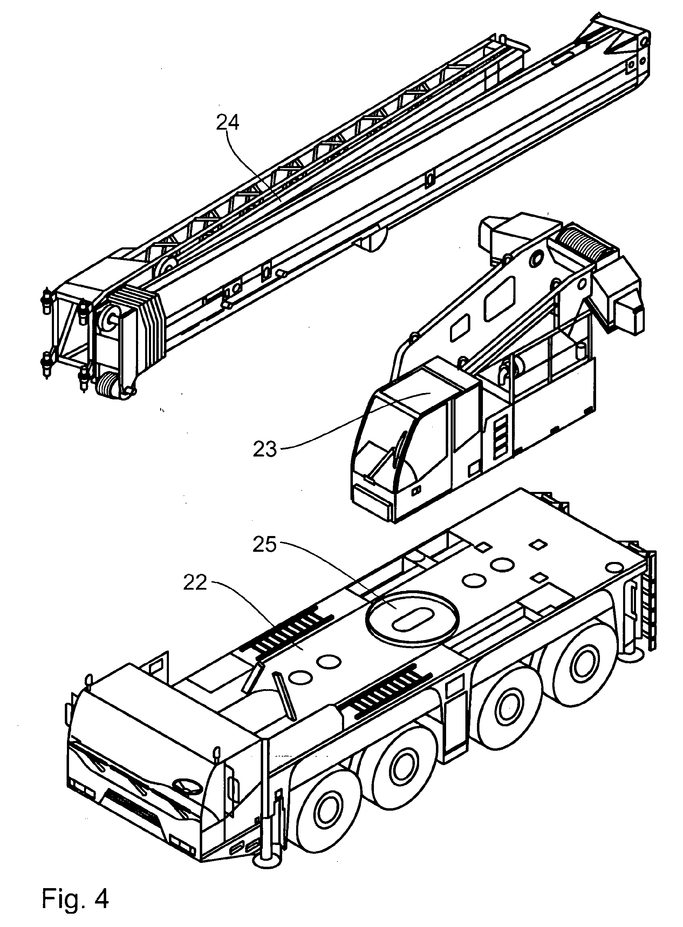

In Figur 4 ist ein Ausführungsbeispiel eines Mobil-Krans dargestellt. Der Mobil-Kran umfasst einen Unterwagen 22, einen Oberwagen 23 und ein Auslegersystem 24. Der Unterwagen 22 weist eine Drehaufnahme 25 auf, die zur Aufnahme einer an einem Oberwagenrahmen 19 angebrachten Drehverbindung 20 dient. Durch die Aufnahme der Drehverbindung 20 in der Drehaufnahme 25 ist eine um eine vertikale Achse drehbare Verbindung zwischen Unterwagen 22 und Oberwagen 23 hergestellt. Das Auslegersystem 24 kann an dem Oberwagen 23 befestigt sein.

## Patentansprüche

1. Hydraulisch gesteuerte Bremsvorrichtung zum sicheren und gezielten Abbremsen hydraulisch angetriebener Drehwerke in Arbeitsmaschinen mit
- mindestens einem Drehwerksantrieb (1, 3),
- mindestens zwei Haltebremsen (2, 4),
- jeweils einer mit einer Haltebremse (2, 4) verbundenen und dieser zugeordneten Steuerleitung (10, 11),
- einer über mindestens ein schaltbares Wegeventil (14, 15) und die Steuerleitungen (10, 11) an die Haltebremsen (2, 4) angeschlossenen Druckleitung (16),
- mindestens einem Druckspeicher (12) und
- mindestens einer Drosseleinrichtung (13), die in einer Nutz-Strömungsrichtung (26) offen ist und in einer der Nutz-Strömungsrichtung (26) entgegen gerichteten Drossel-Strömungsrichtung (27) eine Drosselverbindung ist, **dadurch gekennzeichnet, dass**
- die Haltebremsen (2, 4) so ausgeführt sind, dass sie durch Anlegen eines Hydraulikdruckes geöffnet sind und selbsttätig schließen, sobald ein kritischer Hydraulikdruck unterschritten wird,
- ein Druckspeicher (12) und eine Drosseleinrichtung (13) jeweils an mindestens einer der Steuerleitungen (10, 11) derart angebracht sind, dass
- bei Ausfall einer Druckversorgung in den Steuerleitungen (10, 11) die mit dem Druckspeicher (12) und der Drosseleinrichtung (13) verbundene Steuerleitung (11) durch den Druckspeicher (12) und aufgrund der Drosseleinrichtung (13) zusätzlich mit Druck beaufschlagt wird, sodass der kritische Hydraulikdruck in der Steuerleitung (11) zu einem späteren Zeitpunkt unterschritten wird und die mit dieser Steuerleitung (11) verbundene Haltebremse (4) zeitverzögert gegenüber der mindestens einen weiteren Haltebremse (2) schließt.

2. Bremsvorrichtung nach Anspruch 1, **dadurch gekennzeichnet, dass** jede Steuerleitung (10, 11) über ein Wegeventil (14, 15) mit der Druckleitung verbunden ist.

3. Bremsvorrichtung nach Anspruch 1 oder 2, **dadurch gekennzeichnet, dass** mehrere, insbesondere alle mit Ausnahme einer, Steuerleitungen mit jeweils einem Druckspeicher (12) und jeweils einer Drosseleinrichtung (13) verbunden sind, wobei die Drosseleinrichtungen (13) derart unterschiedlich eingestellt sind, dass die damit verbundenen Haltebremsen (4) mit unterschiedlichen Zeitverzögerungen schließen.

4. Bremsvorrichtung nach einem der Ansprüche 1 bis 3, **dadurch gekennzeichnet, dass** die Haltebremsen (2, 4) bei dem mindestens einen stillstehenden Drehwerksantrieb (1, 3) derart ansteuerbar sind, dass ein unmittelbares Schließen der Haltebremsen (2, 4) erfolgt.

5. Bremsvorrichtung nach einem der Ansprüche 1 bis 4, **dadurch gekennzeichnet, dass** die Drehwerksantriebe mit einem Tank (9) über eine Konstantpumpe (8) und ein Steuerventil (7) verbunden sind, wobei eine Druckversorgung der Drehwerksantriebe durch den Tank (9) erfolgt.

6. Mobil-Kran mit
- mindestens einer Bremsvorrichtung nach einem der Ansprüche 1 bis 5,
- einem über eine Drehverbindung (20) mit einem Unterwagen (22) verbundenen Oberwagen (23), der einen Oberwagenrahmen (19) aufweist, und
- einem an dem Oberwagen (23) befestigten Auslegersystem (24),
wobei an dem Oberwagenrahmen (19) die mindestens eine Bremsvorrichtung angebracht ist, die ein beschädigungs- und kollisionsfreies Abbremsen einer Drehbewegung des Auslegersystems (24) bei einer Drehgeschwindigkeit im Bereich von 1 min⁻¹ bis 2 min⁻¹, insbesondere von bis zu 3 min⁻¹, ermöglicht.

## Claims

1. Hydraulically controlled braking device for the safe and targeted braking of hydraulically driven rotating mechanisms in work machines, comprising
- at least one rotating mechanism drive (1, 3);
- at least two holding brakes (2, 4);
- in each case one control line (10, 11) connected and associated to a respective holding brake (2, 4);
- a pressure line (16) connected to the holding brakes (2, 4) via at least one switchable directional control valve (14, 15) and the control lines (10, 11);
- at least one pressure reservoir (12); and
- at least one throttling device (13) which is open in an operational direction of flow (26) and is a throttling connection in a throttling direction of flow (27) opposite to the operational direction of flow (26),
**characterized in that**
- the holding brakes (2, 4) are configured in such a way that they are open when a hydraulic pressure is applied and close automatically as soon as an actual hydraulic pressure falls below a critical hydraulic pressure;
- a pressure reservoir (12) and a throttling device (13) are each mounted to at least one of the control lines (10, 11) in such a way that
- when a pressure supply in the control lines (10, 11) fails, an additional amount of pressure is applied to the control line (11) connected to the pressure reservoir (12) and the throttling device (13) via the pressure reservoir (12) and the throttling device (13) so that the pressure in the control line (11) falls below the critical hydraulic pressure at a later point in time and the holding brake (4) connected to said control line (11) closes at a later point in time than at least one additional holding brake (2).

2. Braking device according to claim 1, **characterized in that** each control line (10, 11) is connected to the pressure line via a directional control valve (14, 15).

3. Braking device according to claim 1 or 2, **characterized in that** several, in particular all except one, control lines are connected to in each case one pressure reservoir (12) and in each case one throttling device (13), the throttling devices (13) being set differently to ensure that the holding brakes (4) connected thereto close at different time lags.

4. Braking device according to one of claims 1 to 3, **characterized in that** the holding brakes (2, 4) of the at least one idle rotating mechanism drive (1, 3) are actuable such that the holding brakes (2, 4) are closed immediately.

5. Braking device according to one of claims 1 to 4, **characterized in that** the rotating mechanism drives are connected to a tank (9) via a constant pump (8) and a control valve (7), the rotating mechanism drives being supplied with pressure by means of the tank (9).

6. Mobile crane comprising
- at least one braking device according to one of claims 1 to 5;
- an upper carriage (23) connected to an undercarriage (22) via a rotary joint (20), the upper carriage (23) having an upper carriage frame (19); and
- a boom system (24) mounted to the upper carriage (23), the at least one braking device being mounted to the upper carriage frame (19), the braking device providing for a damage- and collision-free braking of a rotational movement of the boom system (24) at a rotational speed in the range of 1 min⁻¹ to 2 min⁻¹, in particular of up to 3 min⁻¹.

## Revendications

1. Dispositif de freinage commandé de manière hydraulique, pour un freinage assuré et ciblé de mécanismes rotatifs entraînés de manière hydraulique dans des machines, comprenant
- au moins un entraînement de mécanisme rotatif (1, 3),
- au moins deux freins d'arrêt (2, 4),
- une conduite de commande (10, 11), reliée et affectée à chaque frein d'arrêt (2, 4),
- une conduite sous pression (16), raccordée aux freins d'arrêt (2, 4) par l'intermédiaire d'au moins un distributeur (14, 15) commutable et par les conduites de commande (10, 11),
- au moins un accumulateur de pression (12), et
- au moins un système de limitation (13), qui est ouvert dans un sens d'écoulement en fonctionnement (26) et est un raccord avec limiteur dans un sens d'écoulement limité (27), orienté à l'opposé du sens d'écoulement en fonctionnement (26),
**caractérisé en ce que**
- les freins d'arrêt (2, 4) sont conçus de telle sorte qu'ils sont ouverts par l'application d'une pression hydraulique et se ferment automatiquement dès que l'on est inférieur à une pression hydraulique critique,
- qu'un accumulateur de pression (12) et un système de limitation (13) sont rapportés, chaque fois, sur au moins une des conduites de commande (10, 11) de telle manière que
- lors d'une défaillance d'une alimentation en pression dans les conduites de commande (10, 11), la conduite de commande (11) reliée avec l'accumulateur de pression (12) et le système de limitation (13) est soumise à une pression supplémentaire par l'accumulateur de pression (12) et en raison du système du limitation (13), de sorte que la pression dans la conduite de commande (11) descend plus tard en dessous de la pression hydraulique critique et que le frein d'arrêt (4) correspondant à cette conduite de commande (11) se ferme, décalé dans le temps, par rapport à au moins un autre frein d'arrêt (2).

2. Dispositif de freinage selon la revendication 1, **caractérisé en ce que** chaque conduite de commande (10, 11) est reliée avec la conduite sous pression par l'intermédiaire d'un distributeur (14, 15).

3. Dispositif de freinage selon les revendications 1 ou 2, **caractérisé en ce que** plusieurs, notamment, toutes, à l'exception d'une, parmi les conduites de commande sont reliées avec chaque fois un accumulateur de pression (12) et chaque fois un système de limitation (13), les systèmes de limitation (13) étant réglés de manière variable de telle sorte qu'ils ferment les freins d'arrêt (4), qui leur sont reliés, avec des décalages dans le temps variables.

4. Dispositif de freinage selon l'une des revendications 1 à 3, **caractérisé en ce que** les freins d'arrêt (2, 4) peuvent être mis en route lors du repos d'au moins un entraînement de mécanisme rotatif (1, 3) de telle sorte qu'il se produit une fermeture immédiate des freins d'arrêt (2, 4).

5. Dispositif de freinage selon l'une des revendications 1 à 4, **caractérisé en ce que** les entraînements des mécanismes rotatifs sont reliés avec un réservoir (9) par une pompe à débit constant (8) et une vanne de commande (7), une alimentation en pression des entraînements des mécanismes rotatifs se produisant par le réservoir (9).

6. Grue mobile comprenant
- au moins un dispositif de freinage selon l'une des revendications 1 à 5,
- une superstructure (23), qui présente un châssis (19) de superstructure, reliée avec une structure portante (22) par un joint tournant (20), et
- un système de flèche (24) fixé sur la superstructure (23), avec au moins un dispositif de freinage fixé sur le châssis (19) de superstructure permettant le freinage d'un mouvement de rotation du système de flèche (24) sans dommage ni collision, pour une vitesse de rotation dans une plage de 1 min⁻¹ à 2 min⁻¹, notamment, jusqu'à 3 min⁻¹.
